# EUROPÄISCHE PATENTSCHRIFT

(11) **EP 3 885 588 B1**
(45) Veröffentlichungstag und Bekanntmachung des Hinweises auf die Patenterteilung: **07.06.2023**
(21) Anmeldenummer: 21159814.9
(22) Anmeldetag: 01.03.2021
(51) Int. Cl.: F16B 5/02, F16B 19/02, H02G 3/22, H01B 17/56

(54) **ISOLIERHÜLSE**
INSULATING SLEEVE
MANCHON ISOLANT

(30) Priorität: 24.03.2020 DE 102020107989; 24.02.2021 DE 102021104335
(43) Veröffentlichungstag der Anmeldung: 29.09.2021
(73) Patentinhaber: fischerwerke GmbH & Co. KG, 72178 Waldachtal (DE)
(72) Erfinder: Ganszki, Timo, 72178 Waldachtal (DE)
(74) Vertreter: Suchy, Ulrich Johannes

(56) Entgegenhaltungen:
- EP-B1- 0 476 513
- WO-A1-2004/098352
- CN-A- 108 386 431
- CN-A- 110 748 541
- US-B2- 9 741 474

## Beschreibung

Die Erfindung betrifft eine Isolierhülse mit den Merkmalen des Oberbegriffs des Anspruchs 1 und eine Befestigungsanordnung mit einer solchen Isolierhülse.

Die erfindungsgemäße Isolierhülse ist speziell für eine elektrisch isolierte Befestigung einer Halterung einer Oberleitung einer elektrischen Eisen- oder Straßenbahn in Tunneln vorgesehen. Oberleitungen werden mit stangenförmigen oder leiter- oder gitterartigen Trägern befestigt, die ihrerseits an Halteplatten befestigt werden. Die Halteplatten werden mit typischerweise drei oder vier stangenförmigen Ankern, die in einer Tunneldecke oder einer Tunnelwand verankert sind, im Tunnel befestigt. Dazu weisen die Halteplatten Durchgangslöcher auf, die von den Ankern durchgriffen werden. Auf den Ankern und in den Durchgangslöchern wird jeweils eine erfindungsgemäße Isolierhülse angeordnet, die die Anker und die Halteplatte elektrisch voneinander isoliert. Die erfindungsgemäße Isolierhülse ist kein Hochspannungsisolator, sondern es wird der Träger mit einem Hochspannungsisolator elektrisch von der Oberleitung und/oder von der Halteplatte isoliert. Die erfindungsgemäße Isolierhülse soll Kriechströme zwischen der Halteplatte und dem Anker verhindern. Die erfindungsgemäße Isolierhülse ist nicht auf den zuvor genannten Einsatzzweck beschränkt. Insbesondere ist ein Einsatz der Isolierhülse in Systemen mit hoch sensiblen elektrischen Bauteilen möglich. Bei derart sensiblen Bauteilen ist es wichtig, dass Kriechströme nahezu gänzlich vermieden werden, wozu die erfindungsgemäße Isolierhülse geeignet ist.

Allgemein ermöglicht die erfindungsgemäße Isolierhülse eine effiziente elektrisch isolierte Anordnung eines ein Durchgangsloch aufweisenden Anbauteils auf einem stangenförmigen Anker, der das Durchgangsloch durchgreift. Ein Anker kann beispielsweise eine Verbund- oder Spreizanker zu Verankerung in Beton oder eine Schraube sein, die in einen Ankergrund eingeschraubt oder mittels eine Mutter verspannt wird.

Eine einfache Isolierhülse offenbart das Patent GB 178 849. Diese Isolierhülse besteht aus zwei ineinander geschobenen, das heißt teleskopierbaren, rohrförmigen Hülsen aus einem elektrisch isolierenden Werkstoff, deren axiale Länge durch axiales Verschieben der beiden Hülsen einstellbar ist.

Das Dokument US 9 741 474 B zeigt eine bekannte Hülse.

Aufgabe der Erfindung ist, eine Isolierhülse zu einer elektrisch isolierten Befestigung eines ein Durchgangsloch aufweisenden Anbauteils auf einem stangenförmigen, das Durchgangsloch durchgreifenden Anker vorzuschlagen.

Diese Aufgabe wird erfindungsgemäß durch die Merkmale des Anspruchs 1 gelöst. Die erfindungsgemäße Isolierhülse weist zwei ineinander teleskopierbare Hülsenteile auf. "Teleskopierbar" bedeutet, dass die Hülsenteile gegeneinander verschiebbar sind, so dass sich eine Länge der Isolierhülse ändert. Die "Länge" der Isolierhülse ist die Abmessung, in der sich die Hülse in der Richtung erstreckt, in die nach der Montage ein Anker die Isolierhülse durchgreift. Das Teleskopieren erfolgt somit in Längsrichtung, also in der Richtung. in der sich die Isolierhülse entlang einer Längsachse erstreckt. Jedes Hülsenteil weist einen Rohrabschnitt und mindestens eine Lasche auf. Insbesondere sind die Rohrabschnitte der Hülsenteile in Umfangsrichtung um die Längsachse geschlossen. Die Laschen der Hülsenteile stehen insbesondere in beziehungsweise entgegen der Längsachse von dem jeweiligen Rohrabschnitt des Hülsenteils ab. Beim Teleskopieren gleitet die Lasche eines Hülsenteils auf oder in dem Rohrabschnitt des anderen Hülsenteils. Insbesondere liegen die Laschen in Umfangsrichtung der beiden Hülsenteile aneinander an beziehungsweise greifen zwischen einander, so dass sie eine vollflächige, in Umfangsrichtung geschlossene Mantelfläche bilden. Durch die geschlossene Mantelfläche ist eine effiziente elektrische Isolierung zwischen Anbauteil und Anker gewährleistet und es können keine oder nur sehr geringe Kriechströme zwischen Anbauteil und Anker fließen.

Die beiden Hülsenteile der erfindungsgemäßen Isolierhülse lassen sich von gegenüberliegenden Seiten in ein Durchgangsloch eines Anbauteils stecken, wobei die beiden Hülsenteile zugleich auch zu der Isolierhülse zusammengesteckt werden. Aufgrund der Teleskopierbarkeit der Hülsenteile kann eine Länge der Isolierhülse an eine Dicke des Anbauteils angepasst werden. Da die Laschen beim Teleskopieren über oder in dem Rohrabschnitt der anderen Lasche gleitet, ist bleibt die Mantelfläche der erfindungsgemäßen Isolierhülse beim Teleskopieren geschlossen. Zu seiner Befestigung lässt sich das Anbauteil auf einen stangenförmigen, bereits im Ankergrund befestigten Anker aufsetzen, so dass der Anker die Isolierhülse in dem Durchgangsloch durchgreift.

Alternativ kann der Anker zu einer Verankerung in einem Ankergrund durch die Isolierhülse durchgesteckt werden. Die Isolierhülse isoliert das Anbauteil elektrisch von dem Anker. Sie bildet eine in Umfangsrichtung und in axialer Richtung geschlossene, elektrisch isolierende Hülle des Ankers in dem Durchgangsloch des Anbauteils, wodurch Kriechströme verhindert oder zumindest stark reduziert sind. Mit dem Anbauteil und dem Anker bildet die Isolierhülse eine Befestigungsanordnung gemäß der Erfindung.

Vorzugsweise sind die beiden Hülsenteile drehfest zueinander, wobei "drehfest" hier meint, dass die beiden Hülsenteile nicht relativ zueinander um die Längsachse gedreht werden können. Insbesondere ist die Drehfestigkeit dadurch bedingt, dass die Laschen der Hülsenteile in Umfangsrichtung der beiden Hülsenteile aneinander anliegen.

Eine bevorzugte Ausgestaltung der Erfindung sieht einen Radialflansch an einem und vorzugsweise an beiden Hülsenteilen vor. Der Radialflansch isoliert das Anbauteil elektrisch von beispielsweise einer auf den stangenförmigen Anker geschraubten Mutter. Zudem können der beziehungsweise die Radialflansche als Anschlagelemente dienen, wodurch eine maximale Teleskopierbarkeit auf die Dicke des Anbauteils beschränkt ist. Die Isolierhülsen sind insbesondere derart weit ineinander teleskopierbar, bis der jeweilige Radialflansch in Anlage zu dem Anbauteil tritt.

Um eine Unterlegscheibe beispielsweise aus Metall an einem Hülsenteil der Isolierhülse, wenn das Hülsenteil und/oder die Isolierhülse beispielsweise aus Kunststoff bestehen, anordnen zu können, sieht eine Ausgestaltung der Erfindung eine Halterung an einer Außenseite des Hülsenteils vor, mit der die Unterlegscheibe koaxial zum Rohrabschnitt an dem Hülsenteil befestigbar ist. Vorzugsweise ist die Halterung eine Schnappeinrichtung, in die die Unterlegscheibe einschnappbar ist. "Außenseite" bezieht sich auf einen in vorgesehener Weise zusammengesetzten Zustand der beiden Hülsenteile der Isolierhülse. Die Außenseite des Hülsenteils befindet sich außen, wenn die beiden Hülsenteile wie vorgesehen zusammengesetzt sind. Die Unterlegscheibe und/oder das Hülsenteil beziehungsweise die Isolierhülse können auch aus anderen Materialien als aus Metall beziehungsweise Kunststoff bestehen. Es kann ein oder es können beide Hülsenteile der Isolierhülse eine Halterung zu einer konzentrischen Anordnung einer Unterlegscheibe aufweisen. Die Halterung vereinfacht die Montage. Ist das Anbauteil mittels des Ankers und der erfindungsgemäßen Isolierhülse am Ankergrund befestigt, hält die Unterlegscheibe von selbst und die Halterung wird nicht mehr benötigt.

Eine Weiterbildung sieht vor, dass der Radialflansch des einen Hülsenteils einen Durchbruch für jede Lasche des anderen Hülsenteils aufweist, durch den die mindestens eine Lasche des anderen Hülsenteils durchtreten kann. Dadurch lassen sich die beiden Hülsenteile nicht nur bis zu einem Anstoßen der Lasche/n des einen Hülsenteils am Radialflansch des anderen Hülsenteils zusammenschieben sondern die beiden Hülsenteile lassen sich weiter zusammenschieben, wobei die Lasche/n des einen Hülsenteils durch den oder die Durchbrüche im Radialflansch des anderen Hülsenteils durchtreten. Die Durchbrüche vergrößern eine teleskopierbare Länge beziehungsweise den Verschiebeweg der beiden Hülsenteile gegeneinander. Die Durchbrüche können die Form eines Querschnitts der jeweils zugeordneten Lasche aufweisen. Möglich sind auch größere Durchbrüche.

In bevorzugter Ausgestaltung der Erfindung sind die beiden Hülsenteile identisch, so dass sie sich spiegelverkehrt zusammenstecken lassen. Das erübrigt die Herstellung unterschiedlicher Hülsenteile und es müssen keine unterschiedlichen Hülsenteile zum Zusammenstecken ausgesucht werden. Zudem sind beide Hülsenteile mit demselben Spritzgusswerkzeug herstellbar.

Die Hülsenteile können jeweils eine Lasche aufweisen, die sich beispielsweise um 180° in Umfangsrichtung erstreckt, oder die Hülsenteile weisen jeweils mehrere Laschen auf, die sich vorzugsweise entsprechend ihrer Anzahl weniger weit in der Umfangsrichtung erstrecken.

In bevorzugter Ausgestaltung der Erfindung sind die Laschen eines Hülsenteils achsspiegelsymmetrisch zu Freiräumen zwischen den Laschen des anderen Hülsenteils, so dass die Laschen des einen Hülsenteils in die Freiräume zwischen den Laschen des anderen Hülsenteils greifen und die zwischen einander greifenden Laschen der beiden Hülsenteile zusammen eine in Umfangsrichtung geschlossene, rohrförmige Isolierung bilden. Bei jedem Hülsenteil ist somit die Anzahl der Laschen gleich der Anzahl der Freiräume. Bei einer ungeraden Anzahl Laschen und Freiräumen zwischen den Laschen je Hülsenteil sind bei dieser Ausgestaltung der Erfindung die Laschen achsspiegelsymmetrisch zu den Freiräumen, und bei einer geraden Anzahl Laschen und Freiräumen zwischen den Laschen je Hülsenteil sind bei dieser Ausgestaltung der Erfindung die Laschen achsspiegelsymmetrisch zueinander.

Eine bevorzugte Ausgestaltung der Erfindung sieht vor, dass die Hülsenteile mehrere Laschen aufweisen, die gleichmäßig über einen Umfang verteilt angeordnet sind und die sich in der Umfangsrichtung gleich weit erstrecken wie ihre Abstände in der Umfangsrichtung voneinander beziehungsweise wie die Breite ihrer Freiräume zwischen den Laschen. Diese Ausgestaltung der Erfindung ermöglicht identische Hülsenteile, die so zusammensteckbar sind, dass die Laschen des einen Hülsenteils in die von den Abständen zwischen den Laschen des anderen Hülsenteils gebildete Freiräume greifen und die Laschen die Abstände zwischen den Laschen des anderen Hülsenteils ohne Zwischenraum überbrücken, so dass eine in Umfangsrichtung geschlossene, rohrförmige Isolierung gebildet ist.

Vorzugsweise sind die Laschen der beiden Hülsenteile konzentrisch zueinander und zu den Rohrabschnitten und die Rohrabschnitte gleichachsig zueinander.

Ebenfalls vorzugsweise ist die mindestens eine Lasche zylinderschalenförmig und der Rohrabschnitt zylindrisch, wenngleich andere, runde und/oder eckige Formen möglich sind.

Bei bevorzugten Ausgestaltungen der Erfindung ist die mindestens eine Lasche ohne Zwischenraum innen oder außen an einem Umfang des Rohrabschnitts angeordnet.

Um eine eingestellte Länge der Isolierhülse fixieren zu können, sieht eine Ausgestaltung der Erfindung eine Schnappeinrichtung vor, die die beiden Hülsenteile in festgelegten Schiebestellungen lösbar gegen Verschieben aneinander hält. Die Schnappeinrichtung kann beispielsweise ein zahnstangenartiges, in einer Längsrichtung verlaufendes Profil innen oder außen an mindestens einer Lasche eines Hülsenteils aufweisen, das in ein komplementäres, ebenfalls in der Längsrichtung verlaufendes Profil außen oder innen an dem Rohrabschnitt des anderen Hülsenteils greift. Durch eine Axialkraft lassen sich die Profile außer Eingriff bringen und die beiden Hülsenteile gegeneinander verschieben, bis sie wieder ineinander schnappen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen.

Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand dreier in der Zeichnung dargestellter Ausführungsbeispiele näher erläutert. Es zeigen:
- Figur 1a: eine perspektivische Darstellung eines Hülsenteils einer erfindungsgemäßen Isolierhülse;
- Figur 1b: das Hülsenteil aus Figur 1 mit anderer Blickrichtung;
- Figur 1c: einen Achsschnitt einer Befestigungsanordnung gemäß der Erfindung mit einer aus zwei Hülsenteilen gemäß Figuren 1a und 1b zusammengesteckten Isolierhülse;
- Figur 2a: eine perspektivische Darstellung eines Hülsenteils eines zweiten Ausführungsbeispiels einer erfindungsgemäßen Isolierhülse;
- Figur 2b: das Hülsenteil aus Figur 2a mit anderer Blickrichtung;
- Figur 2c: die aus zwei Hülsenteilen gemäß Figuren 2a und 2b zusammengesteckte Isolierhülse in perspektivischer Darstellung;
- Figur 2d: die Isolierhülse aus Figur 2c mit anderer Blickrichtung;
- Figur 3a: eine perspektivische Darstellung eines Hülsenteils eines dritten Ausführungsbeispiels einer erfindungsgemäßen Isolierhülse;
- Figur 3b: das Hülsenteil aus Figur 3a mit anderer Blickrichtung;
- Figur 3c: die aus zwei Hülsenteilen gemäß Figuren 3a und 3b zusammengesteckte Isolierhülse in perspektivischer Darstellung;
- Figur 4a: eine perspektivische Darstellung eines Hülsenteils eines vierten Ausführungsbeispiels einer erfindungsgemäßen Isolierhülse; und
- Figur 4b: das Hülsenteil aus Figur 4a mit anderer Blickrichtung.

Grundsätzlich sind in den Figuren gleiche Teile mit gleichen Bezugszahlen versehen.

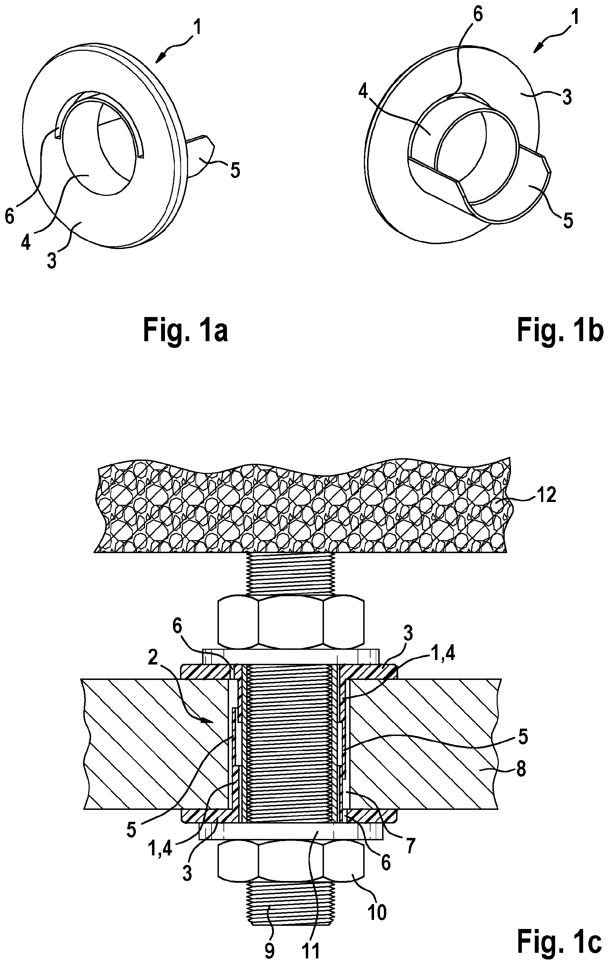

Die Figuren 1a und 1b zeigen ein Hülsenteil 1 einer erfindungsgemäßen Isolierhülse 2. Das Hülsenteil 1 besteht aus Kunststoff oder einem anderen elektrisch isolierenden Werkstoff. Es werden zwei vorzugsweise identische Hülsenteile 1 zu der Isolierhülse 2 zusammengesteckt, wie es Figur 1c zeigt.

Das Hülsenteil 1 weist einen lochscheibenförmigen Radialflansch 3, von dem ein Rohrabschnitt 4 absteht, auf. An einem Außenumfang des Rohrabschnitts 4 weist das Hülsenteil 1 eine Lasche 5 auf, die sich ungefähr doppelt so weit von dem Radialflansch 3 weg erstreckt wie der Rohrabschnitt 4. Im Ausführungsbeispiel sind der Radialflansch 3, der Rohrabschnitt 4 und die Lasche 5 einstückig miteinander und konzentrisch zueinander. Der Rohrabschnitt 4 ist zylinderrohrförmig und die Lasche 5 ist zylinderschalenförmig, ein Innendurchmesser des Rohrabschnitts 4 ist gleich groß wie ein Durchmesser eines Mittellochs des Radialflansches 3, und ein Innendurchmesser der Lasche 5 ist so groß wie ein Außendurchmesser des Rohrabschnitts 4, wobei sich ein Innenumfang der Lasche 5 ohne Zwischenraum an einem Außenumfang des Rohrabschnitts 4 befindet. Die beschriebenen Formen und Anordnungen des Radialflansches 3, des Rohrabschnitts 4 und der Lasche 5 gelten für das dargestellte und beschriebene Ausführungsbeispiel und auch für die beiden weiteren Ausführungsbeispiele der Erfindung, sind allerdings nicht zwingend für die Erfindung. Andere Formen und Anordnungen des Radialflansches 3, des Rohrabschnitts 4 und der Lasche 5 sind möglich. Ebenfalls ist eine mehrstückige Ausführung des Hülsenteils 1 möglich.

In Figuren 1a bis 1c erstreckt sich die Lasche 5 über 180° in Umfangsrichtung, hat also die Form einer Halbzylinderschale. Der Radialflansch 3 weist einen den Rohrabschnitt 4 koaxial umschließenden Durchbruch 6 in einem Umfangsabschnitt auf, den die Lasche 5 frei lässt. Der Durchbruch 6 ist so groß und so angeordnet, dass die Lasche 5 eines anderen, identischen Hülsenteils 1 durchtreten kann. Im Ausführungsbeispiel weist der Durchbruch 6 die Form eines Querschnitts der Lasche 5 auf, das heißt, im Ausführungsbeispiel ist der Durchbruch 6 ein halbkreisbogenförmiger Schlitz, der den gleichen Durchmesser wie die Lasche 5 aufweist, der so breit wie die Lasche 5 dick ist und der sich über den Umfangsabschnitt erstreckt, den die Lasche 5 frei lässt.

Zur Herstellung einer erfindungsgemäßen Befestigungsanordnung werden zwei identische Hülsenteile 1 von gegenüberliegenden Seiten in ein Durchgangsloch 7 eines Anbauteils 8 gesteckt, wodurch zugleich auch die beiden Hülsenteile 1 zu der erfindungsgemäßen Isolierhülse 2 zusammengesteckt werden. Beim Zusammenstecken der beiden Hülsenteile 1 gleitet die Lasche 5 des einen Hülsenteils 1 auf dem Außenumfang des Rohrabschnitts 4 des anderen Hülsenteils 1, wodurch die beiden Hülsenteile 1 axial in Längsrichtung verschiebbar aneinander geführt sind, was auch als "teleskopierbar" bezeichnet werden kann. Die beiden halbzylinderschalenförmigen Laschen 5 ergänzen sich zu einer in Umfangsrichtung geschlossenen, rohrförmigen Hülse, das heißt, sie weisen eine vollflächige Mantelfläche auf. Zusammen mit den Rohrabschnitten 4 bilden die Laschen 5 eine auch in axialer Richtung ohne Unterbrechung zwischen den Radialflanschen 5 der beiden Hülsenteile 1 durchgehende rohrförmige Hülse.

Achsparallele Längsränder der halbzylinderschalenförmigen Laschen 5 liegen aneinander an, wodurch die beiden Hülsenteile 1 drehfest miteinander sind.

Die beiden Hülsenteile 1 lassen sich soweit zusammenschieben, bis ihre Rohrabschnitte 4 aneinanderstoßen. Die Laschen 5 können durch die Durchbrüche 6 in den Radialflanschen 3 durchtreten, so dass die Laschen 5 das Zusammenschieben der beiden Hülsenteile 1 nicht beschränken. Die beiden Hülsenteile 1 werden so weit zusammengeschoben, dass ihre Radialflansche 3 an beiden Seiten des Anbauteils 8 anliegen, wodurch eine axiale Länge der Isolierhülse 2 an eine Dicke des Anbauteils 8 angepasst wird.

Zu seiner Befestigung wird das Anbauteil 8 mit seinem Durchgangsloch 7, in dem sich die Isolierhülse 2 befindet, in Längsrichtung auf einen stangenförmigen Anker 9 aufgesetzt, der das Durchgangsloch 7 in Längsrichtung durchgreift. Mit Muttern 10, die beiderseits des Anbauteils 8 auf den Anker 9 geschraubt sind beziehungsweise werden, wird das Anbauteil 8 auf dem Anker 9 festgelegt. Zwischen den Muttern 10 und den Radialflanschen 3 der Isolierhülse 2 können Unterlegscheiben 11 angeordnet werden.

Die erfindungsgemäße Isolierhülse 2 isoliert das Anbauteil 8 sowohl im Durchgangsloch 7 als auch in das Durchgangsloch 7 umschließenden Randbereichen von Oberflächen des Anbauteils 8 elektrisch von dem das Durchgangsloch 7 durchgreifenden Anker 9. Die zwischen einander greifenden Laschen 5 und die Rohrabschnitte 4 der beiden Hülsenteile 1 bilden eine in Umfangsrichtung und in axialer Richtung geschlossene, rohrförmige, elektrische Isolierung zwischen dem Anker 9 und dem Anbauteil 8 und die Radialflansche 3 bilden Isolierscheiben auf den Oberflächen des Anbauteils 8.

Im Ausführungsbeispiel ist das Anbauteil 8 eine Halteplatte, an der ein nicht dargestellter Haltearm oder dergleichen zur Befestigung einer Oberleitung einer elektrischen Straßen- oder Eisenbahn befestigt werden kann. Der Anker 9 ist im Ausführungsbeispiel ein stangenförmiger Anker, der in einem Ankergrund 12, beispielsweise in einer Tunnelwand oder Tunneldecke eines Tunnels, verankert ist. Die das Anbauteil 8 bildende Halteplatte weist drei oder vier Durchgangslöcher 7 auf, in die jeweils eine Isolierhülse 2 eingesetzt wird und an denen sie mit jeweils einem Anker als Anker 9 befestigt wird. Die Isolierhülse 2 ist kein Hochspannungsisolator, sondern isoliert das Anbauteil 8 elektrisch gegen Kriechströme von dem Anker 9. Der nicht dargestellte Haltearm zur Befestigung der Oberleitung weist einen Hochspannungsisolator auf.

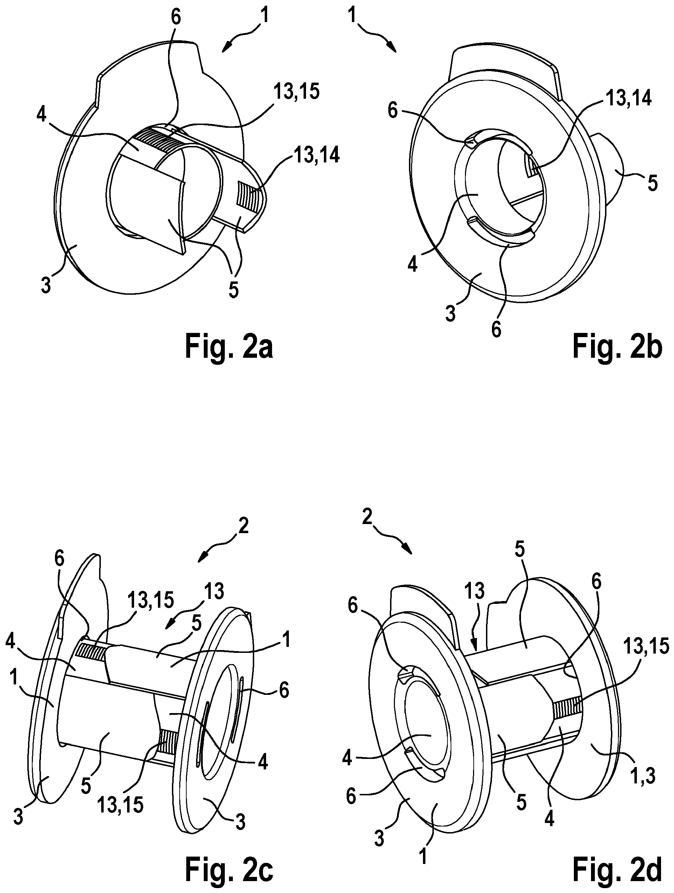

Die in Figuren 2a bis 2d dargestellte, erfindungsgemäße Isolierhülse 2 weist wie die Isolierhülse 2 aus Figuren 1a bis 1c zwei identische, aus einem elektrisch isolierenden Werkstoff bestehende Hülsenteile 1 auf, die teleskopierbar zusammengesteckt sind. Wie in Figuren 1a bis 1c weist jedes Hülsenteil 1 aus Figuren 2a bis 2d einen lochscheibenförmigen Radialflansch 3, einen konzentrisch von ihm abstehenden Rohrabschnitt 4 und ebenfalls konzentrisch an einem Außenumfang des Rohrabschnitts 4 angeordnete Laschen 5 auf. Im Unterschied zu Figuren 1a bis 1c weist jedes Hülsenteil 1 aus Figuren 2a bis 2d zwei anstatt eine Lasche 5 auf. Die Laschen 5 sind gleichmäßig über einen Umfang verteilt angeordnet und Abstände zwischen den Laschen 5 in Umfangsrichtung sind so groß, wie sich die Laschen 5 in der Umfangsrichtung erstrecken. Das heißt, die beiden Laschen 5 jedes Hülsenteils 1 aus Figuren 2a bis 2d sind viertelzylinderschalenförmig und erstrecken sich über 90° in Umfangsrichtung, so dass ein Abstand von 90° in der Umfangsrichtung zwischen den Laschen 5 eines Hülsenteils 1 besteht. In diesen Abstand, der auch als Freiraum zwischen den Laschen 5 eines Hülsenteils 1 aufgefasst werden kann, greifen die Laschen 5 eines anderen, identischen Hülsenteils 1, wenn die beiden Hülsenteile 1 zu der erfindungsgemäßen Isolierhülse 2 zusammengesteckt sind. Die beiden zu der Isolierhülse 2 zusammengesteckten Hülsenteile 1 zeigen die Figuren 2c und 2b. Die Laschen 5 eines Hülsenteils 1 können auch als achspiegelsymmetrisch zu den Laschen 5 eines anderen Hülsenteils 1, wenn die Hülsenteile 1 eine gerade Anzahl an Laschen 5 aufweisen, und als achspiegelsymmetrisch zu den Freiräumen zwischen den Laschen 5 des anderen Hülsenteils 1, wenn die Hülsenteile 1 eine ungerade Anzahl an Laschen 5 aufweisen, aufgefasst werden.

Der Radialflansch 3 eines Hülsenteils 1 weist für jede der beiden Laschen 5 des anderen Hülsenteils 1 einen Durchbruch 6 auf, der sich in Figuren 2a bis 2d über einen Viertelkreis erstreckt.

Im Übrigen ist die Isolierhülse 2 beziehungsweise sind ihre Hülsenteile 1 aus Figuren 2a bis 2d übereinstimmend mit derjenigen aus Figuren 1a bis 1c ausgebildet und funktioniert in gleicher Weise. Ergänzend werden zur Erläuterung der Figuren 2a bis 2d die Erläuterungen der Figuren 1a bis 1c in Bezug genommen.

Während in Figuren 1a bis 1c die beiden Hülsenteile 1 klemmend aneinanderhalten, weisen die Hülsenteile 1 aus Figuren 2a bis 2d eine Schnappeinrichtung 13 auf, um sie gegen unbeabsichtigte Verschiebung gegeneinander zu halten. Die Schnappeinrichtung 13 weist ein erstes zahnstangenartiges Profil 14 innen an einem Innenumfang der Laschen 5 auf, das sich achsparallel erstreckt und das mit einem zweiten zahnstangenartigen Profil 15 am Außenumfang des Rohrabschnitts 4 des anderen Hülsenteils 1 zusammenwirkt. Die zahnstangenartigen Profile 14, 15 greifen ineinander und halten die beiden Hülsenteile 1 gegen Verschieben aneinander. Durch eine auf die beiden Hülsenteile 1 ausgeübte Axialkraft treten die beiden zahnstangenartigen Profile 14, 15 außer Eingriff, so dass sich die Hülsenteile 1 axial gegeneinander verschieben lassen. Bei Beendigung der Verschiebung schnappen die zahnstangenartigen Profile 14, 15, die die Schnappeinrichtung 13 bilden, wieder ineinander. Möglich, allerdings nicht zwingend, ist, dass die beiden Hülsenteile 1 der Isolierhülse 2 aus Figuren 2a bis 2d zusätzlich zur Schnappeinrichtung 13 auch klemmend gegen unbeabsichtigte Verschiebung aneinanderhalten.

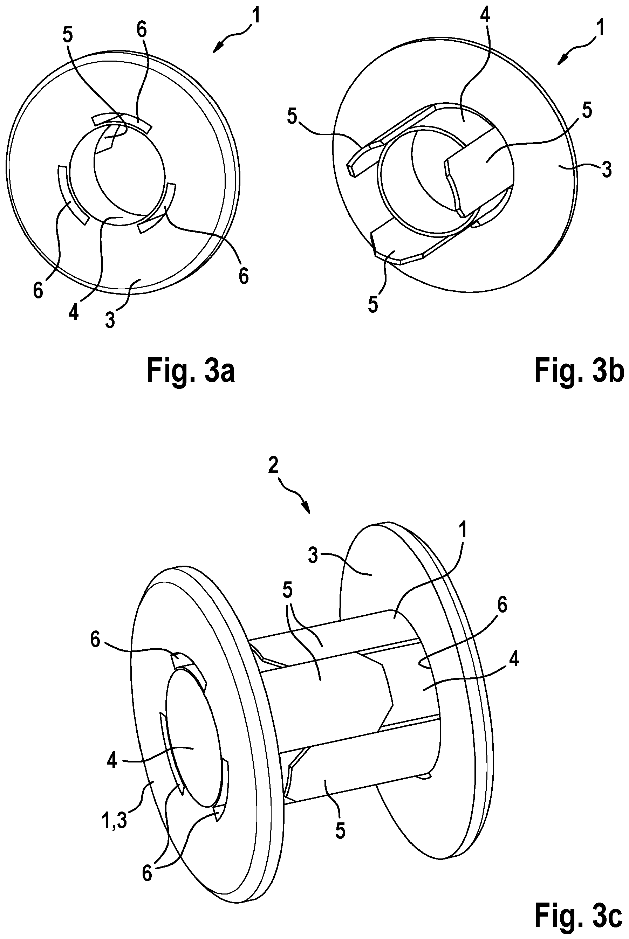

Bei der in Figuren 3a bis 3c gezeigten Ausführungsform der Erfindung weist das Hülsenteil 1 drei zylinderschalenförmige Laschen 5 auf, die sich jeweils über 60° in Umfangsrichtung erstrecken und zwischen denen Freiräume von ebenfalls 60° in der Umfangsrichtung bestehen. Die Durchbrüche 6 im Radialflansch 3 sind kreisbogenförmige Schlitze, die sich über den Freiraum zwischen den Laschen 5, das heißt ebenfalls über 60° in Umfangsrichtung erstrecken. Ergänzend zur Erläuterung der Figuren 3a bis 3c werden die Erläuterungen der Figuren 1a bis 1c und 2a bis 2d in Bezug genommen.

Ausführungen der erfindungsgemäßen Isolierhülse 2 mit Hülsenteilen 1, die vier oder mehr Laschen 5 aufweisen, sind möglich (nicht dargestellt).

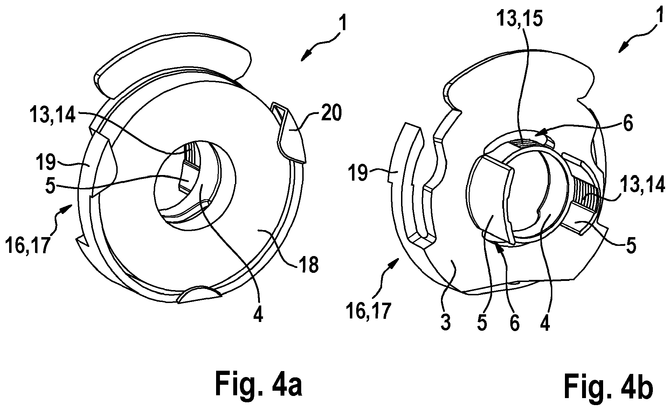

Im Vergleich mit Figuren 2a, b weist das in Figuren 4a, b gezeigte Hülsenteil 1 zusätzlich eine Schnappeinrichtung 16 als Halterung 17 für eine Unterlegscheibe 18 auf. Ansonsten sind die Hülsenteile in Figuren 2a, b und 4a, b identisch. Die Schnappeinrichtung 16 beziehungsweise Halterung 17 hält die Unterlegscheibe 18 auf einer Außenseite des Radialflansches 3 konzentrisch zum Rohrabschnitt 4. Die Außenseite ist dem Rohrabschnitt 4 und den Laschen 5 abgewandt und befindet sich an einander abgewandten Außenseiten oder Stirnseiten der Isolierhülse 2, wenn zwei Hülsenteile 1 wie vorgesehen zu der Isolierhülse 2 zusammengesetzt sind.

Die die Halterung 17 für die Unterlegscheibe 18 bildende Schnappeinrichtung 16 weist im Ausführungsbeispiel zwei kreisbogenförmige, radial federnde Federarme 19 an einem Umfang des Radialflansches 3 auf, die die Unterlegscheibe 18, wenn sie zwischen die Federarme 19 eingeschnappt ist, auf einem Umfang von mehr als 180° umgreifen.

In einem Abstand von dem Radialflansch 3, der einer Dicke der Unterlegscheibe 18 entspricht, weisen die Federarme 19 beziehungsweise die Schnappeinrichtung 16 oder Halterung 17 - im Ausführungsbeispiel drei - radial nach innen stehende Haltelaschen 20 auf, die die Unterlegscheibe 18 auf einer dem Radialflansch 3 abgewandten Seite übergreifen und dadurch an dem Radialflansch 3 halten.

Wie oben beschrieben sind - mit Ausnahme der Schnappeinrichtung 16 beziehungsweise Halterung 17 für die Unterlegscheibe 18, die das Hülsenteil 1 aus Figuren 2a, b nicht aufweist - die Hülsenteile 1 aus Figuren 2a, b und Figuren 4a, b identisch, so dass zur Erläuterung der Figuren 4a, b ergänzend auf die Erläuterungen der Figuren 2a, b beziehungsweise auch der anderen Figuren verwiesen werden kann.

### Bezugszeichenliste

- 1: Hülsenteil
- 2: Isolierhülse
- 3: Radialflansch
- 4: Rohrabschnitt
- 5: Lasche
- 6: Durchbruch
- 7: Durchgangsloch
- 8: Anbauteil
- 9: Anker
- 10: Mutter
- 11: Unterlegscheibe
- 12: Ankergrund
- 13: Schnappeinrichtung
- 14: erstes zahnstangenartiges Profil
- 15: zweites zahnstangenartiges Profil
- 16: Schnappeinrichtung
- 17: Halterung
- 18: Unterlegscheibe
- 19: Federarm
- 20: Haltelasche

## Patentansprüche

1. Isolierhülse aus einem elektrisch isolierenden Werkstoff zu einer elektrisch isolierten Befestigung eines ein Durchgangsloch (7) aufweisenden Anbauteils (8) auf einem stangenförmigen, das Durchgangsloch (7) durchgreifenden Anker (9), wobei die Isolierhülse (2) ein erstes und ein zweites Hülsenteil (1) umfasst, die ineinander teleskopierbar sind, sodass die Isolierhülse (2) eine vollflächige Mantelfläche aufweist, wobei jedes der Hülsenteile (1) einen Rohrabschnitt (4) aufweist, wobei jedes der Hülsenteile (1) mindestens eine Lasche (5) aufweist,
**dadurch gekennzeichnet, dass** jeweils die Lasche (5) eines der Hülsenteile (1) über oder in dem Rohrabschnitt (4) des anderen Hülsenteils (1) gleitet.

2. Isolierhülse nach Anspruch 1, **dadurch gekennzeichnet, dass** das erste und das zweite Hülsenteil (1) drehfest zueinander sind.

3. Isolierhülse nach Anspruch 1 oder 2, **dadurch gekennzeichnet, dass** das erste und/oder das zweite Hülsenteil (1) einen Radialflansch (3) aufweist.

4. Isolierhülse nach einem oder mehreren der Ansprüche 1 bis 3, **dadurch gekennzeichnet, dass** ein Hülsenteil (1) eine Halterung (17) für eine Unterlegscheibe (18) aufweist, die die Unterlegscheibe (18) koaxial zu ihrem Rohrabschnitt (4) auf einer der Lasche (5) abgewandten Außenseite des einen Hülsenteils (1) hält.

5. Isolierhülse nach Anspruch 4, **dadurch gekennzeichnet, dass** die Halterung (17) eine Schnappeinrichtung (16) aufweist, in die die Unterlegscheibe (18) eingeschnappt ist.

6. Isolierhülse nach einem oder mehreren der Ansprüche 3 bis 5, **dadurch gekennzeichnet, dass** der Radialflansch (3) eines der Hülsenteile (1) einen Durchbruch (6) für jede Lasche (5) des anderen Hülsenteils (1) aufweist, durch den die mindestens eine Lasche (5) des anderen Hülsenteils (1) durchtreten kann.

7. Isolierhülse nach einem oder mehreren der vorhergehenden Ansprüche, **dadurch gekennzeichnet, dass** die Hülsenteile (1) identisch sind.

8. Isolierhülse nach einem oder mehreren der vorhergehenden Ansprüche, **dadurch gekennzeichnet, dass** die Hülsenteile (1) mehrere Laschen (5) aufweisen.

9. Isolierhülse nach einem oder mehreren der vorhergehenden Ansprüche, **dadurch gekennzeichnet, dass** die Lasche (5) oder die Laschen (5) eines der Hülsenteile (1) achsspiegelsymmetrisch zu der Lasche (5) oder den Laschen (5) oder zu Freiräumen zwischen der Lasche (5) oder den Laschen (5) des anderen Hülsenteils (1) sind, so dass die Lasche (5) oder die Laschen (5) des einen Hülsenteils (1) in die Freiräume zwischen der Lasche (5) oder den Laschen (5) des anderen Hülsenteils (1) greifen und die Laschen (5) beider Hülsenteile (1) eine in Umfangsrichtung geschlossene, rohrförmige Isolierung bilden.

10. Isolierhülse nach einem oder mehreren der vorhergehenden Ansprüche, **dadurch gekennzeichnet, dass** die Hülsenteile (1) mehrere Laschen (5) aufweisen, die gleichmäßig über einen Umfang verteilt angeordnet sind und die sich in der Umfangsrichtung gleich weit erstrecken wie ihre Abstände in der Umfangsrichtung voneinander.

11. Isolierhülse nach einem oder mehreren der vorhergehenden Ansprüche, **dadurch gekennzeichnet, dass** die mindestens eine Lasche (5) zylinderschalenförmig und der Rohrabschnitt (4) zylindrisch ist.

12. Isolierhülse nach einem oder mehreren der vorhergehenden Ansprüche, **dadurch gekennzeichnet, dass** die Hülsenteile (1) eine Schnappeinrichtung (13) aufweisen, die die Hülsenteile (1) in festgelegten Schiebestellungen lösbar gegen Verschieben aneinanderhält.

13. Befestigungsanordnung mit einer Isolierhülse (2) nach einem oder mehreren der vorhergehenden Ansprüche, **dadurch gekennzeichnet, dass** die Isolierhülse (2) auf einem stangenförmigen Anker (9) und in einem Durchgangsloch (7) eines Anbauteils (8) angeordnet ist.

## Claims

1. Insulating sleeve made of an electrically insulating material for electrically insulated attachment of an add-on part (8) having a through-hole (7) to a rod-shaped anchor (9) which passes through the through-hole (7), wherein the insulating sleeve (2) comprises first and second sleeve parts (1) which are telescopable one into the other, so that the insulating sleeve (2) has an unbroken lateral surface, wherein each of the sleeve parts (1) has a tubular portion (4), each of the sleeve parts (1) having at least one tongue (5), **characterised in that** in each case the tongue (5) of one of the sleeve parts (1) slides over or in the tubular portion (4) of the other sleeve part (1).

2. Insulating sleeve according to claim 1, **characterised in that** the first and second sleeve parts (1) are fixed against rotation relative to one another.

3. Insulating sleeve according to claim 1 or 2, **characterised in that** the first and/or second sleeve part (1) has a radial flange (3).

4. Insulating sleeve according to one or more of claims 1 to 3, **characterised in that** one sleeve part (1) has a holder (17) for a washer (18), which holder holds the washer (18) coaxially with its tubular portion (4) on an outer side of the one sleeve part (1), which outer side faces away from the tongue (5).

5. Insulating sleeve according to claim 4, **characterised in that** the holder (17) has a snap device (16) into which the washer (18) has been snapped.

6. Insulating sleeve according to one or more of claims 3 to 5, **characterised in that** the radial flange (3) of one of the sleeve parts (1) has an opening (6) for each tongue (5) of the other sleeve part (1), through which opening the at least one tongue (5) of the other sleeve part (1) is able to pass.

7. Insulating sleeve according to one or more of the preceding claims, **characterised in that** the sleeve parts (1) are identical.

8. Insulating sleeve according to one or more of the preceding claims, **characterised in that** the sleeve parts (1) have a plurality of tongues (5).

9. Insulating sleeve according to one or more of the preceding claims, **characterised in that** the tongue (5) or the tongues (5) of one of the sleeve parts (1) is/are axially mirror-symmetrical with respect to the tongue (5) or the tongues (5) or with respect to free spaces between the tongue (5) or the tongues (5) of the other sleeve part (1), so that the tongue (5) or the tongues (5) of the one sleeve part (1) engage(s) in the free spaces between the tongue (5) or the tongues (5) of the other sleeve part (1), and the tongues (5) of both sleeve parts (1) form a tubular insulator that is closed in the circumferential direction.

10. Insulating sleeve according to one or more of the preceding claims, **characterised in that** the sleeve parts (1) have a plurality of tongues (5) which are arranged uniformly distributed around a circumference and extend the same distance in the circumferential direction as do their spacings from one another in the circumferential direction.

11. Insulating sleeve according to one or more of the preceding claims, **characterised in that** the at least one tongue (5) is cylindrical-shell-shaped and the tubular portion (4) is cylindrical.

12. Insulating sleeve according to one or more of the preceding claims, **characterised in that** the sleeve parts (1) have a snap device (13) which releasably holds the sleeve parts (1) together in fixed slide positions against displacement.

13. Fastening arrangement having an insulating sleeve (2) according to one or more of the preceding claims, **characterised in that** the insulating sleeve (2) is arranged on a rod-shaped anchor (9) and in a through-hole (7) of an add-on part (8).

## Revendications

1. Manchon isolant en matériau électriquement isolant pour une fixation électriquement isolée d'une pièce rapportée (8) présentant un trou traversant (7) sur un ancrage (9) en forme de tige traversant le trou traversant (7), le manchon isolant (2) comprenant des première et seconde parties de manchon (1) qui peuvent être télescopique l'une dans l'autre, de sorte que le manchon isolant (2) présente une surface d'enveloppe pleine, chacune des parties de manchon (1) présentant une section de tube (4), chacune des parties de manchon (1) présentant au moins une patte (5),
**caractérisé en ce que**
la patte (5) d'une certaine des parties de manchon (1) glisse sur ou dans la section de tube (4) de l'autre partie de manchon (1).

2. Manchon isolant selon la revendication 1, **caractérisé en ce que les** première et seconde parties de manchon (1) sont solidaires en rotation l'une par rapport à l'autre.

3. Manchon isolant selon la revendication 1 ou 2, **caractérisé en ce que** la première et/ou la seconde partie de manchon (1) présente u rebord radial (3).

4. Manchon isolant selon une ou plusieurs des revendications 1 à 3, **caractérisé en ce qu'**une partie de manchon (1) présente un dispositif de maintien (17) pour une rondelle (18), qui maintient la rondelle (18) coaxialement par rapport à sa section de tube (4) sur un côté extérieur de la certaine partie de manchon (1) opposé à la patte (5).

5. Manchon isolant selon la revendication 4, **caractérisé en ce que** le dispositif de maintien (17) présente un dispositif d'encliquetage (16) dans lequel la rondelle (18) est encliquetée.

6. Manchon isolant selon une ou plusieurs des revendications 3 à 5, **caractérisé en ce que** le rebord radial (3) de l'une des parties de manchon (1) présente un passage traversant (6) pour chaque patte (5) de l'autre partie de manchon (1), à travers lequel au moins une patte (5) de l'autre partie de manchon (1) peut passer.

7. Manchon isolant selon une ou plusieurs des revendications précédentes, **caractérisé en ce que** les parties de manchon (1) sont identiques.

8. Manchon isolant selon une ou plusieurs des revendications précédentes, **caractérisé en ce que** les parties de manchon (1) présentent plusieurs pattes (5).

9. Manchon isolant selon une ou plusieurs des revendications précédentes, **caractérisé en ce que** la patte (5) ou les pattes (5) d'une certaine des parties de manchon (1) sont axialement symétriques par rapport à la patte (5) ou aux pattes (5) ou à des espaces entre la patte (5) ou les pattes (5) de l'autre partie de manchon (1), de sorte que la patte (5) ou les pattes (5) de la certaine partie de manchon (1) viennent en prise dans les espaces entre la patte (5) ou les pattes (5) de l'autre partie de manchon (1) et que les pattes (5) des deux parties de manchon (1) forment une isolation tubulaire fermée dans la direction périphérique.

10. Manchon isolant selon une ou plusieurs des revendications précédentes, **caractérisé en ce que** les parties de manchon (1) présentent plusieurs pattes (5) qui sont réparties uniformément sur une circonférence et qui s'étendent dans la direction circonférentielle sur la même distance que leurs distances dans la direction circonférentielle les unes par rapport aux autres.

11. Manchon isolant selon une ou plusieurs des revendications précédentes, **caractérisé en ce que** la au moins une patte (5) est en forme de coque cylindrique et la section de tube (4) est cylindrique.

12. Manchon isolant selon une ou plusieurs des revendications précédentes, **caractérisé en ce que** les parties de manchon (1) présentent un dispositif d'encliquetage (13) qui maintient les parties de manchon (1) l'une contre l'autre de manière amovible dans des positions de coulissement définies.

13. Dispositif de fixation avec un manchon isolant (2) selon une ou plusieurs des revendications précédentes, **caractérisé en ce que** le manchon isolant (2) est disposé sur un ancrage (9) en forme de tige et dans un trou traversant (7) d'une pièce rapporté (8).
